(19) Europäisches Patentamt
European Patent Office
Office européen des brevets

(11) **EP 3 402 341 B1**

(12) **EUROPEAN PATENT SPECIFICATION**

(45) Date of publication and mention
of the grant of the patent:
**12.05.2021 Bulletin 2021/19**

(21) Application number: **17703646.4**

(22) Date of filing: **11.01.2017**

(51) Int Cl.:
*A23P 10/25* (2016.01)        *A23K 40/10* (2016.01)
*A23K 50/80* (2016.01)

(86) International application number:
**PCT/EP2017/000027**

(87) International publication number:
**WO 2017/121637 (20.07.2017 Gazette 2017/29)**

(54) **PROCESS FOR THE PREPARATION OF PELLETS**

VERFAHREN ZUR HERSTELLUNG VON PELLETS

PROCÉDÉ POUR LA PRÉPARATION DE GRANULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.01.2016 PCT/EP2016/000026**

(43) Date of publication of application:
**21.11.2018 Bulletin 2018/47**

(73) Proprietors:
• **Südzucker AG
68165 Mannheim (DE)**
• **BioWanze N.V.
1150 Brussel (BE)**

(72) Inventors:
• **MENGER, Hans-Jörg
68799 Reilingen (DE)**
• **MÖLLER, Ralf
B-4520 Vinalmont (BE)**
• **TONNEAUX, André
5100 Erpent (Namur) (BE)**

(74) Representative: **Koster, Nico
Tiense Suikerraffinaderij N.V.
Patent Department
Aandorenstraat 1
3300 Tienen (BE)**

(56) References cited:
EP-A1- 1 785 039          WO-A1-2015/011644
WO-A1-2015/063261        US-A- 3 925 343

## Description

The invention relates to a process for the preparation of pellets containing wheat gluten.

Such a process is as such known from EP-A-1 785 039. The known process comprises the steps of feeding protein comprising vital wheat gluten into a suitable equipment, pouring the heated proteins through a die for obtaining pellets, and collecting the pellets. The proteins in the known process are preferred to have a certain particle size, such that at least 15 wt.% have a particle size of 200 $\mu$m or more.

It is a disadvantage of the known process that the physical stability of the pellets, expressed in pellet durability index (PDI), is not always optimal.

It is the objective of the present invention to reduce the said disadvantage.

The said objective is achieved in that the process comprises:

- A preparatory step, in which a raw material containing at least 50 wt.% wheat gluten is brought to a particle size distribution having a $D_{50}$ of at most 80 $\mu$m and a $D_{90}$ of between 60 $\mu$m and 150 $\mu$m, to form a feeding material; and
- A pelletizing step, in which the feeding material is formed into pellets using suitable means, wherein the pelletizing step is executed in a pellet press or in an extruder.

It is an advantage of the invention that the pellets produced according to the invention can have an increased physical stability, as expressed in PDI.

WO-A-2010/004196 relates to protein pellets comprising wheat gluten, characterized in that the said gluten has: a water retention capacity, determined according to a test A, of between 40 and 160%, preferably between 100 and 150%; and a viscoelastic behaviour, according to the Chopin Alvéograph, determined at a P/L parameter value of between 3 and 10, preferably between 3 and 8. The raw material (gluten powder) is preferably characterised in that 20%, preferably at least 50%, have a size of 250 $\mu$m or more.

WO-A-2015/063261 relates to a process for preparing pellets of compressed proteins comprising vital gluten, pellets obtainable by such a process and an apparatus used in such a process. The raw material (gluten powder) is mixed with a humectant, comprising a liquid compound. The raw material (gluten powder) is preferably characterised in that the $D_{90}$ is at most 500, 350, or 250 $\mu$m.

US-A-3 925 343 discloses that powdered vital wheat gluten is difficult to disperse in water and a dispersion, once obtained, is unstable since individual particles readily coalesce with the formation of an intractable, lumpy mass. By converting the powdered gluten into novel structures in the form of agglomerates thereof under conditions which do not denature the gluten, the gluten can be readily wetted out and dispersed in water to form a relatively stable dispersion. Accordingly, the agglomerated gluten is ideally suited for the manufacture of yeast leavened bakery products, especially by continuous dough-making processes.

The process of the invention relates to the preparation of pellets containing wheat gluten. Such pellets have gained significant commercial interest in recent years, as they are used - amongst others - as raw material by producers of aquafeed pellets. The pellets often are cylindrical having a diameter of several mm, preferably between 3 mm and 8 mm or between 4 and 7 mm, and a length of typically from about 5 mm up to about 40 mm, preferably up to 30 or 25 mm. Wheat gluten is as such a well-known material, which can be produced for example as co-product in a bioethanol plant that uses wheat as the raw material. Wheat gluten typically contains a high amount of proteins, preferably 70 wt.% or more (on dry matter), the rest consisting essentially of other fractions originating from the wheat and/or from wheat processing steps. The other fractions can, as is commonly known, consist of carbohydrates such as non-starch polysaccharides, lipids, and yet further compounds. As meant herein, the term wheat gluten is used in its customary meaning wherein it not only consists of the - preferably at least 70 wt.% - proteins but also contains the said other fractions.

In the preparatory step of the process of the invention, a raw material is provided. The raw material should be in the form of particles and should contain at least 50 wt.% wheat gluten; preferably, the raw material contains at least 70, 75, 80, 85, 90, or even at least 95 wt.% wheat gluten. Most preferably, the raw material consists essentially of wheat gluten or even consists of wheat gluten.

As used herein, the terms 'essentially', 'consist(ing) essentially of', 'essentially all' and equivalents have, unless noted otherwise, in relation to a composition or a process step the usual meaning that deviations in the composition or process step may occur, but only to such an extent that the essential characteristics and effects of the composition or process step are not materially affected by such deviations.

Preferably, the gluten as used in the process of the invention is vital. In the context of the present invention, a gluten is said to be vital if the water binding capacity, determined via the known method AACC 56-30, is at least 130%. In a preferred embodiment, the gluten as used in the process of the invention is highly vital, i.e. its water binding capacity is at least 140%.

According to the preparatory step of the invention, the raw material should be brought to a specific particle size distribution, such that it has a $D_{50}$ of at most 80 $\mu$m and a $D_{90}$ of between 60 $\mu$m and 150 $\mu$m, to form the feeding material.

As is known, the expression that a collection of particles has a 'D$_\alpha$ of β' means that α wt.% of all particles in the collection have a size of at most β.

The particle size information as given or specified herein is determined or should be determined via sieving, a method as such well known. The specific method to be used for determining particle size information according to the invention is the method as disclosed in DIN 66165, part 2, chapter 7.

Wheat gluten is often released from its production process in the form of a powder; if this is not the case, it should be brought into a particulate form. In order to be suitable as the feeding material for the pelletizing step of the invention, the raw material as a whole has a particle size distribution having a D$_{50}$ of at most 80 μm and a D$_{90}$ of between 60 μm and 150 μm. If a material does not satisfy this condition by having more than 10 wt.% of particles of more than 175 μm in size, it should be brought to the appropriate particle size distribution; this can be achieved via means that are as such known such as for example milling or micronizing. Milling, micronizing and equivalents thereof are also the preferred methods to achieve the further preferred embodiments on particle size distribution as outlined below.

Until present, there has been a clear preference in the art for the presence in the raw material of a significant portion at least 15 wt.% or more of particles having a size significantly above 200 μm. This is consistent with the known reputation of wheat gluten powder, which is reputed to be a difficult to handle powder, especially when it concerns smaller particles. Surprisingly, however, it was found that the raw material as defined herein according to the invention is well-suited for pelletizing processes; moreover, it was found that pellets so produced can have improved properties.

The raw material is brought to a particle size distribution such that at least 90 wt.% of the feeding material is at most 150, or even at most 140 μm in size.

The feeding material preferably has a D$_{50}$ of at least 30 or 40 μm and at most 80 μm; more preferably, at least 55 or 60 wt.% of the feeding material is at most 80 μm in size. The feeding material preferably has a D$_{75}$ of at least 40 or 50 μm and at most 100 μm.

In a main preferred embodiment of the invention the feeding material has a D$_{50}$ of at least 40 μm and at most 80 μm, a D$_{75}$ of at least 50 μm and at most 100 μm, and a D$_{90}$ of at least 60 μm and at most 150 μm.

In another preferred embodiment of the invention the feeding material has a D$_{55}$ of at least 45 μm and at most 80 μm, a D$_{75}$ of at least 60 μm and at most 100 μm, and a D$_{90}$ of at least 70 μm and at most 150 μm.

In yet another preferred embodiment of the invention the feeding material has a D$_{55}$ of at most 80 μm, a D$_{75}$ of at most 100 μm, and a D$_{90}$ of at least 80 μm and at most 150 μm or 140μm.

For practical reasons, it is preferred that the D$_{90}$ of the feeding material is at least 60 or 70 μm. In a further preferred embodiment, the D$_{90}$ of the feeding material is at least 80, 90, 100, 110, 120, or even at least 130 μm. In these preferred embodiments, the D$_{90}$ is preferably at most 145, or 140 μm.

According to the invention, the preparatory step is followed by a pelletizing step, in which the feeding material is formed into pellets using suitable means, wherein the pelletizing step is executed in a pellet press or in an extruder. It is however advantageous, before the feeding material enters the pelletizing step and is formed into pellets, to adjust the water content and/or the temperature of the feeding material.

Preferably, the feeding material is humidified prior to being formed into pellets. The humidification is preferably done by means of a liquid, a vapour, or a mixture thereof, and preferably by using an aqueous humidifier. Example of suitable humidifiers are: water, steam, vinasse, molasses, and mixtures thereof. When using an aqueous humidifier, it is preferred to bring the water content of the feeding material to at least 5 or 6 wt.%, more preferably to at least 7, 8, 9 or 10 wt.%; preferably the water content of the feeding material is brought to at most 20 or 15 wt.%, more preferably to at most 14, 13, or 12 wt.%. The humidification can be done by means that are as such known, such as for example a mixer, preferably using a screw and/or paddles to achieve the mixing action.

Preferably, the feeding material has or is brought to a certain temperature before the feeding material enters the pelletizing step and is formed into pellets. The temperature preferably is or is brought to at least 30°C, more preferably at least 35, 40, 45, or even to 50°C; preferably, the temperature is or is brought to at most 100 or 90, more preferably at most 85 or 80°C. In case a rise in temperature of the feeding material is desired, the temperature adjustment can advantageously be done at least partially by means of the addition of steam to the feeding material.

Regarding the pelletizing step of the invention it was found that means that are suitable for known preparation methods of pellets containing wheat gluten such as a pellet press are, possibly after some routine experimentations, suitable for the forming of pellets according to the invention. It was surprisingly found that - at least on common industrial-scale pellet presses, also referred to as pellet mills - no significant adjustment of parameters may be necessary, even though it was expected in the art that the handling and processing of finer particles of wheat gluten is more cumbersome and often even not feasible.

Besides pellet presses, extruders are a means suitable for executing the pelletizing step of the invention.

As is known, it is a common characteristic of means for pelletizing that a pressure is imposed onto the feeding material as one contributing factor to achieving the pellet shape. Consequently, the pelletizing step in the process of the invention causes an increase in the bulk density. This increase in bulk density during the pelletizing step is in contrast to the effect on bulk density of agglomerating steps such as the one disclosed in US-A-3 925 343 which typically lead to a decrease of bulk density. The pelletizing step of the invention is not executed by means of an agglomerating step as disclosed in US-A-3 925 343 or equivalents thereof. Thus, the pelletizing step of the invention is not executed by means of a fluid bed or any one of the other agglomerating methods as disclosed in US-A-3 925 343.

In a preferred embodiment of the invention, the pelletizing step causes an increase of bulk density from the feeding material to the pellets of at least 50 kg/m$^3$, more preferably at least 100 kg/m$^3$. In order to secure optimal properties of the wheat gluten, it was found that it is favourable that the increase in bulk density from the feeding material to the pellets is at most 350 kg/m$^3$, preferable at most 300 or 250 kg/m$^3$. The resulting pellets preferably have a bulk density lying between 450 and 700 kg/m$^3$, more preferably between 475 and 675 kg/m$^3$, most preferably between 500 and 650 kg/m$^3$.

The invention will be illustrated with the Example below, without being limited thereto.

Example 1

Pellets consisting of vital wheat gluten were produced in an industrial-size Bühler Pellet Mill DPHD with an inner diameter of 650 mm, having die holes of 6 mm wide and 60 mm deep.

In Example 1, a vital wheat gluten was first milled in order to achieve a feeding material having particle size distribution according to the invention (see Table 1 below). Immediately prior to being subjected to the pelletizing step, the feeding material was humidified by mixing with 5 wt.% steam, after which it had an average temperature of 61°C and a water content of 11 wt.%. Pelletizing was done with a throughput of 6.1 tonnes per hour. The pellets produced had a water content of 8.7 wt.%.

The pellet durability index (PDI) of the pellets was determined by means of a Holmen NHP 100 pellet tester. The test length was 60 seconds, the pressure was set at 60 mbar. The PDI was determined in the usual way by measuring the weight of the pellets before and after the test and calculating the percentage of weight remaining:

$$PDI = 100 \times (\text{mass of pellets after the test})/(\text{mass of pellets before the test})$$

The average PDI was determined to be 96.4%.

Comparative Experiment A

Vital wheat gluten from the same batch that was used in Example 1 was, in its un-milled form, used for Comparative Experiment A. Pellets were produced in the same installation as was used in Example 1, at the same throughput and using the same amount of steam.

The average PDI of the pellets produced was determined to be 94.9%, i.e. 1.5 % lower than the average PDI of the pellets of Example 1.

The size fractions of the feeding material as given in Table 1 were obtained via sieving.

Table 1

| Size fractions | Example 1 Milled gluten (wt.%) | Comparative Experiment A Unmilled gluten (wt.%) |
|---|---|---|
| Up to 80 $\mu$m | 65 | 28 |
| 80 to 100 $\mu$m | 20 | 15 |
| 100 to 140 $\mu$m | 11 | 17 |
| 140 to 160 $\mu$m | 2 | 7 |
| 160 to 200 $\mu$m | 1 | 9 |
| 200 to 280 $\mu$m | 0.5 | 11 |
| Rest (280 $\mu$m and bigger) | 0.5 | 13 |

From Table 1 it follows that the $D_{90}$ of the gluten according to Example 1 lies between 100 and 140 $\mu$m, whereas the $D_{90}$ of the gluten according to Comparative Experiment A has a value greater than 280 $\mu$m.

**Claims**

1. Process for the preparation of pellets containing wheat gluten, comprising:

   • A preparatory step, in which a raw material containing at least 50 wt.% wheat gluten is brought to a particle size distribution having a $D_{50}$ of at most 80 $\mu$m and a $D_{90}$ of between 60 $\mu$m and 150 $\mu$m as determined by the method as disclosed in DIN 66165, part 2, chapter 7, to form a feeding material;
   • A pelletizing step, in which the feeding material is formed into pellets using suitable means, wherein the pelletizing step is executed in a pellet press or in an extruder.

2. Process according to claim 1, wherein the raw material consists essentially of vital wheat gluten.

3. Process according to claim 3, wherein the raw material is brought to a particle size distribution such that at least 90 wt.% of the feeding material is at most 140 $\mu$m in size.

4. Process according to claim 3 or 4, wherein the raw material is brought to a particle size distribution wherein the $D_{50}$ is between 30 or 40 $\mu$m and 80 $\mu$m, and wherein the $D_{90}$ is at least 80 or 100 $\mu$m and at most 150 or 140 $\mu$m.

5. Process according to any one of claims 3 - 5, wherein the raw material is brought to a particle size distribution wherein the $D_{75}$ is at least 50 or 60 $\mu$m and at most 100 $\mu$m.

6. Process according to any one of claims 1 - 6, wherein the pelletizing step is executed in a pelletizing press.

7. Process according to any one of claims 1 - 7, wherein the feeding material is humidified prior to being formed into pellets and/or brought to a temperature lying between 30 and 100°C.

8. Process according to claim 8, wherein the humidification is done by means of an aqueous liquid and/or an aqueous vapour, such that the water content of the feeding material is between 5 and 20 wt.%.

9. Process according to claim 9, wherein the water content of the feeding material is brought to between 6 and 14 wt.%.

10. Process according to any one of claims 1 - 10, wherein the pelletizing step is executed such that the bulk density of the pellets is between 50 and 350 kg/m$^3$ higher than the bulk density of the feeding material.

11. Process according to claim 11, wherein the pelletizing step is executed such that the bulk density of the pellets is between 100 and 250 kg/m$^3$ higher than the bulk density of the feeding material.

12. Process according to any one of claims 1 - 12, wherein the bulk density of the pellets is between 450 and 700 kg/m$^3$, preferably between 500 and 650 kg/m$^3$.


**Patentansprüche**

1. Verfahren zur Herstellung von Pellets, die Weizengluten enthalten, umfassend:

   • einen Vorbereitungsschritt, bei dem ein Rohmaterial, das wenigstens 50 Gew.-% Weizengluten enthält, auf eine Partikelgrößenverteilung mit einem $D_{50}$ von höchstens 80 $\mu$m und einem $D_{90}$ von zwischen 60 $\mu$m und 150 $\mu$m gebracht wird, um ein Einsatzmaterial zu bilden;
   • einen Pelletierschritt, bei dem das Einsatzmaterial unter Verwendung geeigneter Mittel zu Pellets geformt wird, wobei der Pelletierschritt in einer Pelletpresse oder in einem Extruder durchgeführt wird.

2. Verfahren gemäß Anspruch 1, wobei das Rohmaterial im Wesentlichen aus vitalem Weizengluten besteht.

3. Verfahren gemäß Anspruch 2, wobei das Rohmaterial auf eine Partikelgrößenverteilung gebracht wird, bei der wenigstens 90 Gew.-% des Einsatzmaterials eine Größe von höchstens 140 $\mu$m aufweist.

4. Verfahren gemäß Anspruch 2 oder 3, wobei das Rohmaterial auf eine Partikelgrößenverteilung gebracht wird, bei der der $D_{50}$ zwischen 30 oder 40 $\mu$m und 80 $\mu$m beträgt und wobei der $D_{90}$ wenigstens 80 oder 100 $\mu$m und

höchstens 150 oder 140 μm beträgt.

5. Verfahren gemäß einem der Ansprüche 2-4, wobei das Rohmaterial auf eine Partikelgrößenverteilung gebracht wird, bei der der $D_{75}$ wenigstens 50 oder 60 μm und höchstens 100 μm beträgt.

6. Verfahren gemäß einem der Ansprüche 1-5, wobei der Pelletierschritt in einer Pelletierpresse durchgeführt wird.

7. Verfahren gemäß einem der Ansprüche 1-6, wobei das Einsatzmaterial befeuchtet wird, bevor es zu Pellets geformt und/oder auf eine Temperatur, die zwischen 30 und 100°C liegt, gebracht wird.

8. Verfahren gemäß Anspruch 7, wobei das Befeuchten mithilfe einer wässrigen Flüssigkeit und/oder eines wässrigen Dampfs durchgeführt wird, so dass der Wassergehalt des Einsatzmaterials zwischen 5 und 20 Gew.-% beträgt.

9. Verfahren gemäß Anspruch 8, wobei der Wassergehalt des Einsatzmaterials auf zwischen 6 und 14 Gew.-% gebracht wird.

10. Verfahren gemäß einem der Ansprüche 1-9, wobei der Pelletierschritt so durchgeführt wird, dass die Schüttdichte der Pellets zwischen 50 und 350 kg/m$^3$ höher als die Schüttdichte des Einsatzmaterials ist.

11. Verfahren gemäß Anspruch 10, wobei der Pelletierschritt so durchgeführt wird, dass die Schüttdichte der Pellets zwischen 100 und 250 kg/m$^3$ höher als die Schüttdichte des Einsatzmaterials ist.

12. Verfahren gemäß einem der Ansprüche 1-11, wobei die Schüttdichte der Pellets zwischen 450 und 700 kg/m$^3$, vorzugsweise zwischen 500 und 650 kg/m$^3$, beträgt.


**Revendications**

1. Procédé de préparation de pellets contenant du gluten de blé, comprenant :

   - une étape préparatoire, dans laquelle une matière première contenant au moins 50% en poids de gluten de blé est amenée à une distribution granulométrique ayant une $D_{50}$ d'au plus 80 μm et une $D_{90}$ comprise entre 60 μm et 150 μm, afin de former un matériau d'alimentation ;
   - une étape de pelletisation, dans laquelle le matériau d'alimentation est mis sous forme de pellets à l'aide d'un moyen convenable, où l'étape de pelletisation est mise en œuvre dans une presse de pastillage ou dans une extrudeuse.

2. Procédé selon la revendication 1, dans lequel la matière première est constituée essentiellement de gluten de blé vital.

3. Procédé selon la revendication 2, dans lequel la matière première est amenée à une distribution granulométrique telle qu'au moins 90% en poids du matériau d'alimentation est d'une taille d'au plus 140 μm.

4. Procédé selon la revendication 2 ou 3, dans lequel la matière première est amenée à une distribution granulométrique où la $D_{50}$ est comprise entre 30 ou 40 μm et 80 μm, et où la $D_{90}$ est d'au moins 80 ou 100 μm et d'au plus 150 ou 140 μm.

5. Procédé selon l'une quelconque des revendications 2-4, dans lequel la matière première est amenée à une distribution granulométrique où la $D_{75}$ est d'au moins 50 ou 60 μm et d'au plus 100 μm.

6. Procédé selon l'une quelconque des revendications 1-5, dans lequel l'étape de pelletisation est mise en œuvre dans une presse de pastillage.

7. Procédé selon l'une quelconque des revendications 1-6, dans lequel le matériau d'alimentation est humidifié préalablement à sa mise sous forme de pellets et/ou amené à une température dans la plage entre 30 et 100°C.

8. Procédé selon la revendication 7, dans lequel l'humidification est effectuée au moyen d'un liquide aqueux et/ou d'une vapeur aqueuse, de façon à ce que la teneur en eau du matériau d'alimentation soit entre 5 et 20% en poids.

9. Procédé selon la revendication 8, dans lequel la teneur en eau du matériau d'alimentation est amenée entre 6 et 14% en poids.

10. Procédé selon l'une quelconque des revendications 1-9, dans lequel l'étape de pelletisation est mise en œuvre de façon à ce que la masse volumique apparente des pellets soit entre 50 et 350 kg/m$^3$ supérieure à la masse volumique apparente du matériau d'alimentation.

11. Procédé selon la revendication 10, dans lequel l'étape de pelletisation est mise en œuvre de façon à ce que la masse volumique apparente des pellets soit entre 100 et 250 kg/m$^3$ supérieure à la masse volumique apparente du matériau d'alimentation.

12. Procédé selon l'une quelconque des revendications 1-11, dans lequel la masse volumique apparente des pellets est comprise entre 450 et 700 kg/m$^3$, de préférence entre 500 et 650 kg/m$^3$.

**EP 3 402 341 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1785039 A
- WO 2010004196 A
- WO 2015063261 A
- US 3925343 A